Europäisches Patentamt

European Patent Office

Office européen des brevets

(19)

(11) Numéro de publication : **0 465 298 B1**

(12) **FASCICULE DE BREVET EUROPEEN**

(45) Date de publication du fascicule du brevet :
06.10.93 Bulletin 93/40

(51) Int. Cl.⁵ : **C01B 3/50, C01C 1/04**

(21) Numéro de dépôt : **91401702.5**

(22) Date de dépôt : **25.06.91**

(54) **Procédé et installation de production d'un composant gazeux à partir d'un mélange gazeux.**

(30) Priorité : **25.06.90 FR 9007931**

(43) Date de publication de la demande :
**08.01.92 Bulletin 92/02**

(45) Mention de la délivrance du brevet :
**06.10.93 Bulletin 93/40**

(84) Etats contractants désignés :
**BE DE FR GB NL SE**

(56) Documents cités :
**EP-A- 0 266 745**
**EP-A- 0 344 053**
**FR-A- 2 442 983**
**CHEMICAL ABSTRACTS vol. 108, no. 12, 21**
**mars 1988, page 151, abrégé no. 97063g,**
**Columbus, Ohio, US ;**

(73) Titulaire : **L'AIR LIQUIDE, SOCIETE ANONYME**
**POUR L'ETUDE ET L'EXPLOITATION DES**
**PROCEDES GEORGES CLAUDE**
**75, Quai d'Orsay**
**F-75321 Paris Cédex 07 (FR)**

(72) Inventeur : **Chrétien, Denis**
**110, avenue du Général de Gaulle**
**F-94160 Saint Mandé (FR)**

(74) Mandataire : **Le Moenner, Gabriel et al**
**L'AIR LIQUIDE, Société Anonyme pour l'étude**
**et l'exploitation des procédés Georges Claude**
**75, Quai d'Orsay**
**F-75321 Paris Cédex 07 (FR)**

## Description

La présente invention concerne un procédé de production d'au moins un composant gazeux à partir d'un mélange gazeux contenant le composant gazeux à produire, comprenant les étapes de faire passer un courant du mélange gazeux à une première pression au travers d'un dispositif de séparation par adsorption pour obtenir, pendant une phase de production, sensiblement à la première pression, le composant gazeux, et, pendant une phase de désorption-élution, à une deuxième pression inférieure à la première pression, un premier gaz résiduaire, et d'élever la pression du premier gaz résiduaire pour le combiner avec un courant d'un gaz auxiliaire.

Dans les procédés de ce type, on cherche à valoriser le gaz résiduaire et le plus simple, puisque ce résiduaire contient généralement des gaz combustibles, est de l'adjoindre à un réseau auxiliaire de gaz combustible, dit de réseau "fuel-gas", qui est généralement disponible sur le site, car, notamment pour l'élaboration d'hydrogène pur, le procédé est généralement associé à une installation annexe d'un complexe pétrochimique ou d'une raffinerie de pétrole, où un tel réseau "fuel-gas" récupère différents gaz de purge, par exemple des gaz de purge d'hydrodésulfuration disponibles sous haute pression et que l'on détend à des pressions nettement plus basses, par exemple de l'ordre de 5 à 6 x 10$^5$ Pa, au travers d'une simple vanne, et qui constitue la pression de service du réseau "fuel-gas". Dans la suite de la présente demande de brevet, on qualifie de pression moyenne la pression de ce réseau "fuel-gas" ou plus généralement d'un réseau de gaz auxiliaire, car elle se situe couramment entre la pression haute de cycle et la pression basse de cycle de l'unité d'adsorption d'élaboration du composant gazeux. En effet, et quelle que soit la pression du mélange gazeux, typiquement hydrogéné, à traiter dans l'unité d'adsorption, on a le plus grand intérêt à mettre en oeuvre une pression basse de cycle qui soit la plus basse possible, car le rendement en composant gazeux de l'unité d'adsorption -qui est représenté par le rapport du volume de composant gazeux produit au volume de composant gazeux dans le mélange initial- est d'autant plus élevé que la pression basse de cycle est plus basse, ce qui résulte, sans entrer dans des détails plus complexes, d'une meilleure désorption, donc d'une meilleure régénération de l'adsorbant de l'unité d'adsorption et il n'est pas rare qu'on s'approche à cet effet de la pression atmosphérique, voire en dessous de la pression atmosphérique. On comprend qu'on ne peut alors simplement adjoindre ce gaz résiduaire sous cette basse pression directement au réseau de "fuel-gas" sous "moyenne" pression.

Selon les cas, on réalise cette adjonction de gaz résiduaire en relevant de façon correspondante la pression basse de cycle, au détriment du rendement en composant gazeux produit, ou en mettant en oeuvre un compresseur, ce qui permet de maintenir le rendement en composant gazeux produit, mais constitue une solution onéreuse en frais d'équipement et de maintenance, ainsi qu'en consommation d'énergie.

La présente invention a pour objet un procédé de production avec un rendement élevé correspondant à une pression basse de cycle qui soit satisfaisante -donc bien inférieure à la pression dite moyenne du réseau auxiliaire- sans rencontrer les inconvénients rappelés ci-dessus de l'utilisation d'un compresseur, et cet objectif de l'invention est atteint en ce que l'on introduit le gaz résiduaire à la deuxième pression dans un injecteur alimenté par un courant de gaz moteur à une troisième pression supérieure à la deuxième pression avant combinaison avec le courant de gaz auxiliaire.

C'est donc un aspect particulier de l'invention d'avoir su relier le problème posé d'une pression trop basse de désorption à l'existence sur le site de production d'un réseau de gaz auxiliaire initialement sous haute pression et qui est, de façon non valorisée, détendu pour se situer aux pressions usuelles d'utilisation d'une part, et la possibilité de relever la pression d'un débit de gaz résiduaire de l'unité d'adsorption par l'effet moteur d'un gaz sous très haute pression, le tout de façon à disposer d'un mélange de gaz résiduaire et de gaz auxiliaire sous la pression habituelle. Mais à partir de cette première proposition générale, l'invention propose, notamment si le débit de mélange gazeux à traiter -sous la pression haute de cycle- excède des besoins de fourniture en composant gazeux à produire, de prélever une partie de ce mélange gazeux pour constituer le gaz moteur de l'éjecteur. Egalement si le mélange gazeux sous pression que l'on traite par adsorption est disponible sous une pression plus élevée que la pression haute de cycle choisie, et notamment si, pour assurer un fonctionnement correct de l'unité de perméation, on doit enrichir en composant gazeux à produire ledit mélange gazeux initial en le traitant par une unité de perméation au travers de membranes à perméabilité sélective délivrant un perméat enrichi en composant gazeux à produire et sous une pression réduite correspondant cependant à la pression haute de cycle d'adsorption et un résiduaire sensiblement sous ladite pression plus élevée, on fait en sorte que le gaz résiduaire sous la pression plus élevée serve, au moins en partie, de gaz moteur pour l'éjecteur du gaz résiduaire issu de l'étape ultérieure d'adsorption.

L'invention concerne également une installation de production pour la mise en oeuvre du procédé.

L'invention est maintenant décrite en référence aux dessins annexés sur lesquels :
- la figure 1 est une vue schématique d'une installation de production d'un composant gazeux pur selon l'invention ;
- la figure 2 est une vue en coupe de l'éjecteur ;

- les figures 3 et 4 sont des variantes de réalisation de l'invention.

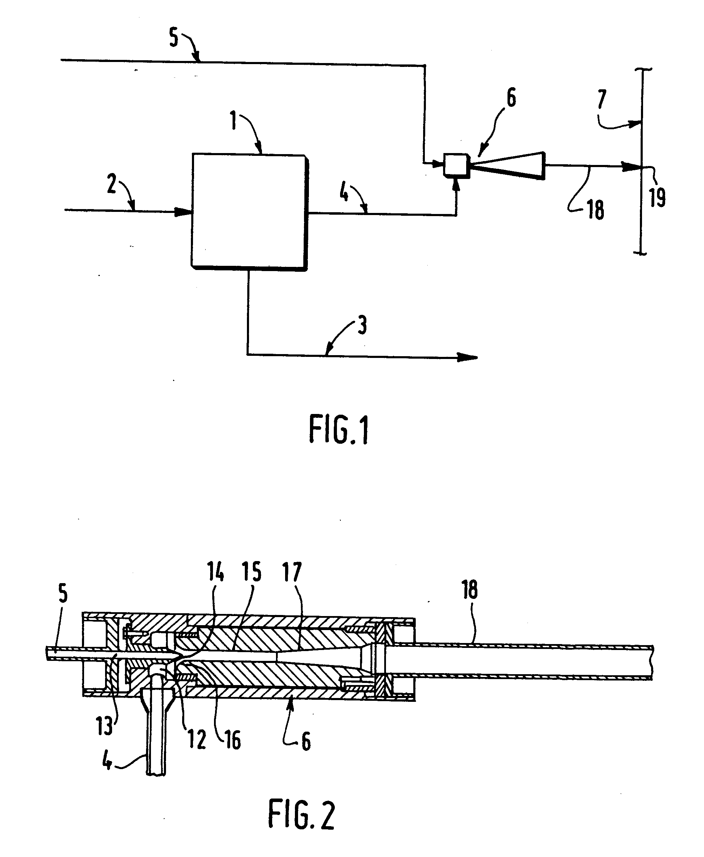

On a représenté schématiquement sur les figures 1 et 2, une installation de production d'un composant gazeux, par exemple d'hydrogène pur, comprenant une unité d'adsorption 1, non représentée en détail, mais comprenant généralement plusieurs adsorbeurs subissant chacun un cycle comprenant une phase de production sous une pression qui est, ou atteint, la pression haute de cycle, une phase de décompression, le cas échéant avec un ou plusieurs équilibrages avec un ou plusieurs adsorbeurs en cours de recompression, éventuellement avec un réservoir de stockage de gaz d'élution, une décompression finale à la pression basse de cycle fournissant du gaz résiduaire, une phase d'élution-purge d'élution à la pression basse de cycle fournissant également du gaz résiduaire et une phase de recompression à la pression de production, le tout de façon à délivrer de façon cyclique, à partir d'un débit admis en 2 de mélange à traiter, un débit sortant d'hydrogène pur délivré en 3, sensiblement sous la même pression que le mélange entrant 2, et un débit d'un mélange gazeux résiduaire délivré en 4 sous une pression basse, généralement voisine de la pression atmosphérique.

Selon l'invention, le gaz résiduaire 4 est introduit dans une chambre 12 d'un éjecteur 6, autour d'un conduit axial 13 d'amenée d'un gaz moteur 5 sous pression élevée, et débouchant en un ajutage restreint 14 à l'entrée d'une tuyère 15 à convergent 16 - divergent 17 délivrant un courant gazeux de sortie 18 à une pression intermédiaire entre la pression basse du résiduaire 4 et la pression élevée du gaz vecteur 5, mais à une pression convenant à son adjonction en 19 dans une ligne 7 d'un réseau de gaz auxiliaire, typiquement de gaz combustible appelé "fuel-gas".

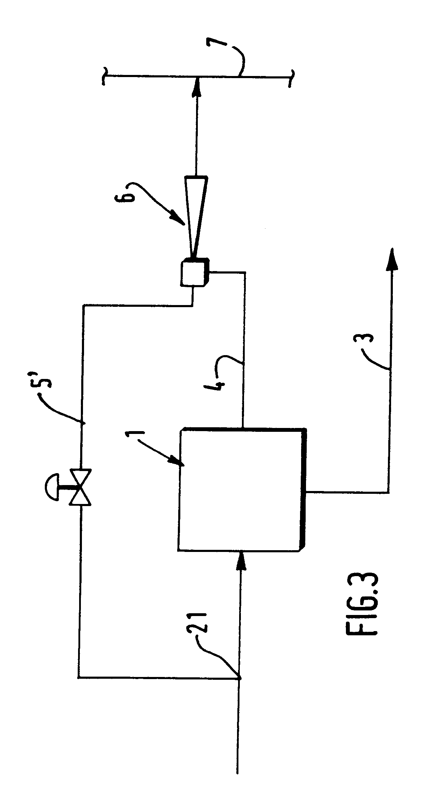

Selon la variante de réalisation de la figure 3, où l'on retrouve l'unité d'adsorption 1, l'éjecteur 6 et le réseau "fuel-gas" 7, le gaz moteur 5' est ici constitué par un débit prélevé en 21 sur le courant excédentaire de mélange gazeux initial 2 sous pression haute de cycle. Cette disposition permet, comme le rendement de l'unité d'adsorption est meilleur, de traiter moins de gaz pour une même production, de sorte que la taille des équipements s'en trouve réduite. L'économie ainsi réalisée est supérieure à l'investissement de l'éjecteur.

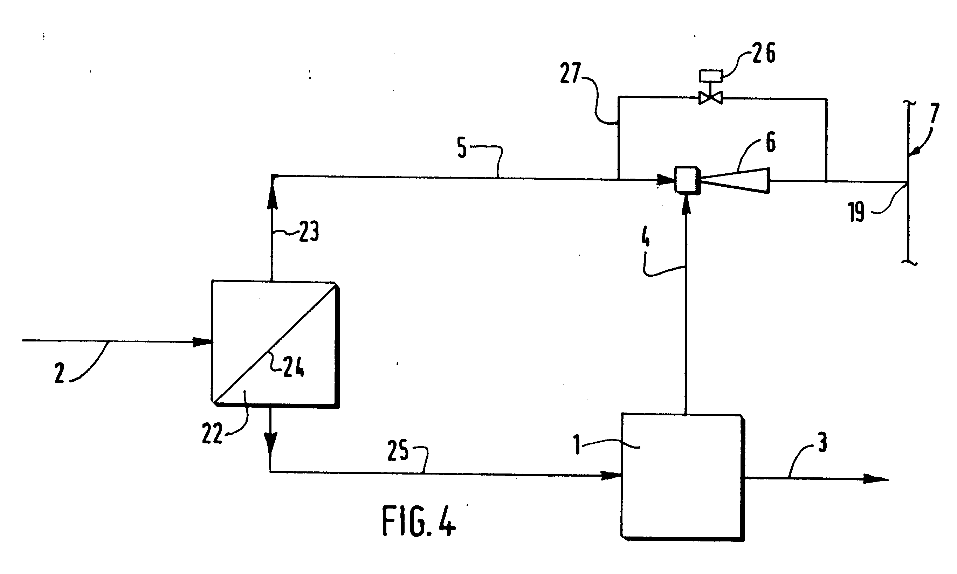

Dans le mode de réalisation de la figure 4, l'unité d'adsorption 1 est associée, en amont, à une unité d'enrichissement 22 en composant à produire, par exemple de l'hydrogène, délivrant un courant gazeux résiduaire 23 qui n'a pas traversé les membranes 24 de l'unité de perméation 22, et qui est donc disponible sous la pression élevée du mélange entrant 2, et un courant de perméation 25 enrichi en composant à produire et se trouvant à une pression moins élevée, mais cependant suffisante pour constituer la pression haute du cycle de l'unité d'adsorption 1 délivrant de l'hydrogène pur 3 sous pression haute et un résiduaire 4 sous basse pression. Le courant gazeux résiduaire 23 sous haute pression est ici utilisé comme gaz moteur pour l'éjecteur 6, et s'il se présente à débit excédentaire, une partie 27 est dérivée entre entrée et sortie d'éjecteur 6 pour être détendue en 26 à la pression de sortie d'éjecteur.

## EXEMPLES D'APPLICATION

### Exemple 1

On purifie un mélange gazeux d'hydrogène ayant la composition suivante :

| Composants | % Mole |
|---|---|
| $H_2$ | 85,46 |
| $CH_4$ | 8,94 |
| $C_2H_6$ | 2,62 |
| $C_3H_8$ | 1,17 |
| $C_4H_{10}$ | 1,02 |
| $C_5H_{12}$ | 0,68 |
| $H_2S$ | 0,11 |

Le mélange hydrogéné est disponible à $30 \times 10^5$ Pa et 38°C. Le débit de gaz d'alimentation est de 1672 Nm³/h.

L'hydrogène doit être purifié à une teneur de 99,999 %.

Le résiduaire doit être rendu au réseau "fuel-gas" à la pression de $6,1 \times 10^5$ Pa absolus.

Dans les procédés connus (sans éjecteur), le résiduaire est directement restitué au réseau fuel gas à 6,1 x 10⁵ Pa. Il est alors produit 900 Nm³/h d'hydrogène pur.

Le bilan matière s'écrit comme suit :

| débit Nm³/h | Alimentation | H₂ produit | Résiduaire |
|---|---|---|---|
| H₂ | 1428,6 | 900 | 528,6 |
| CH₄ | 149,4 | | 149,4 |
| C₂H₆ | 43,8 | | 43,8 |
| C₃H₈ | 19,6 | | 19,6 |
| C₄H₁₀ | 17,1 | | 17,1 |
| C₅H₁₂ | 11,4 | | 11,4 |
| H₂S | 1,8 | | 1,8 |
| débit total | 1671,7 | 900 | 771,7 |
| composition | | | |
| H₂ % vol | 85,46 | 99,999 | 68,50 |
| CH₄ | 8,94 | 10 vpm | 19,36 |
| C₂H₆ | 2,62 | | 5,67 |
| C₃H₈ | 1,17 | | 2,54 |
| C₄H₁₀ | 1,02 | | 2,22 |
| C₅H₁₂ | 0,68 | | 1,48 |
| H₂S | 0,11 | | 0,23 |

Le rendement en hydrogène est de 63 %.

On dispose par ailleurs à proximité de l'unité d'adsorption d'un gaz de purge à haute pression destiné à être brûlé comme "fuel-gas". Sa pression est de 28 x 10⁵ Pa absolus, son débit est de 1350 Nm³/h et sa composition est donnée ci-dessous :

| Composant | % Volume |
|---|---|
| H₂ | 59,59 |
| CH₄ | 24,91 |
| C₂H₆ | 7,39 |
| C₃H₈ | 3,30 |
| C₄H₁₀ | 2,89 |
| C₅H₁₂ | 1,92 |

Selon l'invention, ce gaz est utilisé comme gaz moteur dans l'éjecteur 6 et permettre ainsi d'abaisser la pression du résiduaire jusqu'à 2,8 x 10⁵ Pa absolus.

Le rendement de l'unité d'adsorption ainsi modifiée est sensiblement augmenté. Il passe de 63 % à 72 %.

Le débit d'hydrogène produit augmente de 900 à 1030 Nm³/h, soit 14 %. Le bilan matière devient :

| | Alimentation | H$_2$ produit | Résiduaire |
|---|---|---|---|
| débit Nm$^{3/h}$ | | | |
| H$_2$ | 1428,6 | 1030 | 398,6 |
| CH$_4$ | 149,4 | | 149,4 |
| C$_2$H$_6$ | 43,8 | | 43,8 |
| C$_3$H$_8$ | 19,6 | | 19,6 |
| C$_4$H$_{10}$ | 17,1 | | 17,1 |
| C$_5$H$_{12}$ | 11,4 | | 11,4 |
| H$_2$S | 1,8 | | 1,8 |
| | | | |
| débit total | 1671,7 | 1030 | 641,7 |
| | | | |
| composition | | | |
| H$_2$ % vol | 85,46 | 99,999 | 63,12 |
| CH$_4$ | 8,94 | 10 vpm | 23,28 |
| C$_2$H$_6$ | 2,62 | | 6,83 |
| C$_3$H$_8$ | 1,17 | | 3,05 |
| C$_4$H$_{10}$ | 1,02 | | 2,66 |
| C$_5$H$_{12}$ | 0,68 | | 1,78 |
| H$_2$S | 0,11 | | 0,28 |

(le résiduaire du bilan matière correspond au résiduaire (4) du schéma de la figure 1 et non au mélange issu de l'éjecteur).

Ce procédé permet d'augmenter notablement et sans surcoûts importants le rendement de l'unité d'adsorption 1.

Par ailleurs, la basse pression du résiduaire permet de diminuer la taille des équipements de l'unité d'adsorption. Dans l'exemple ci-dessus, le volume d'adsorbant par bouteille passe de 2,8 à 1,9 m³, soit un gain de 32 %. Le volume de la bouteille d'élution passe de 20 à 10 m³, soit un gain de 50 %. Ces gains sur les équipements permettent de substantielles économies sur le prix de l'unité d'adsorption qui contrebalancent très largement l'investissement de l'éjecteur.

Ces gains sur la taille des équipements trouvent leur efficacité maximale lorsqu'on dispose d'un excédent de mélange hydrogéné initial par rapport aux besoins. On peut dans ce cas ne traiter qu'une partie du mélange hydrogéné comme décrit à la figure 3 et l'autre partie sert de gaz moteur dans l'éjecteur. Les gains ne portent alors pas réellement sur l'augmentation de rendement, qui n'est ici pas recherchée au premier chef puisqu'il y a excédent de mélange hydrogéné, mais sur la taille des équipements.

Exemple 2

Un autre exemple d'application concerne la combinaison d'une unité de perméation par membrane et d'une unité de séparation par adsorption selon la figure 4.

Le perméat 25 a un débit total de 7841 Nm³/h contenant 6286 Nm³ d'hydrogène. Dans un procédé connu sans éjecteur, lorsque le résiduaire 23 de l'unité de perméation 22 est simplement détendu au travers d'une vanne, la production d'hydrogène pur 3 est 4085 Nm³/h. Dans le procédé selon l'invention, un éjecteur 6, avec le même bilan matière sur l'unité de perméation 22, la production d'hydrogène pur augmente jusqu'à 5029 Nm³/h, soit une augmentation de 23 %. Le rendement total des unités de perméation et d'adsorption passe donc de 46 % à 56,7 %.

Si au lieu d'augmenter la capacité de production, on recherche, à production constante, une diminution de la taille des équipements, les gains s'établissent comme suit :
- volume unitaire d'adsorbant : -56 % ;
- volume de stockage du gaz d'élution : -45 %.

Quoique la présente invention ait été décrite en relation avec des modes de réalisation particuliers, elle ne s'en trouve pas limitée mais est au contraire susceptible de modifications et de variantes qui qui sont recouvertes par les revendications adjointes.

La présente invention s'applique notamment à la séparation d'hydrogène à partir d'un mélange contenant de l'hydrogène et du gaz carbonique en sortie d'un dispositif de réformage à la vapeur, à la séparation d'hélium à partir d'un mélange contenant de l'hélium et du méthane, ou à la séparation d'hydrogène et d'argon à partir d'un gaz de purge d'ammoniac. Dans ce dernier cas, un gaz de synthèse est comprimé et adressé à un dispositif de synthèse d'ammoniac dont le gaz de purge, à une pression d'environ $200 \times 10^5$ Pa, est adressé au dispositif de séparation par adsorption 22 de la figure 4, le perméat enrichi en hydrogène et en argon, à une pression d'environ $30 \times 10^5$ Pa étant adressé à l'entrée du dispositif de séparation par adsorption 1. Le résiduaire, enrichi en argon, du dispositif de séparation 1 est adressé, comme précédemment, à l'éjecteur 6 dont le gaz moteur est constitué par le résiduaire, provenant du dispositif de séparation par perméation et le mélange éjecté, à une pression d'environ $5 \times 10^5$ Pa, est fourni à une boîte froide cryogénique pour la récupération de l'argon liquide pur.

**Revendications**

1. Procédé de production d'au moins un composant gazeux (3) à partir d'un mélange gazeux (2) contenant le composant gazeux à produire, comprenant les étapes de faire passer un courant du mélange gazeux à une première pression au travers d'un dispositif de séparation par adsorption (1) pour obtenir, pendant une phase de production sensiblement à la première pression, le composant gazeux, et, pendant une phase de désorption-élution, à une deuxième pression inférieure à la première pression, un premier gaz résiduaire (4), et d'élever la pression du premier gaz résiduaire pour le combiner avec un courant d'un gaz auxiliaire (7), caractérisé en ce qu'il comprend l'étape d'introduire le gaz résiduaire (4) à la deuxième pression dans un injecteur (6) alimenté par un courant de gaz moteur (5, 5') à une troisième pression supérieure à la deuxième pression avant combinaison avec le courant de gaz auxiliaire.

2. Procédé selon la revendication 1, caractérisé en ce que le gaz moteur est une partie prélevée du courant de gaz auxiliaire.

3. Procédé selon la revendication 1, caractérisé en ce que le gaz moteur est une partie (5') prélevée en amont du dispositif de séparation par adsorption (1), du courant de mélange gazeux (2).

4. Procédé selon la revendication 1, caractérisé en ce qu'il comprend les étapes de faire passer le courant du mélange gazeux (2) à une quatrième pression supérieure à la première pression dans un dispositif de séparation par perméation (22) pour obtenir un mélange gazeux enrichi en ledit composant gazeux à la première pression qui est adressé au dispositif de séparation par adsorption (1), et un deuxième gaz résiduaire (23) à la quatrième pression constituant, au moins en partie, le gaz moteur de l'éjecteur (6).

5. Procédé selon l'une des revendications 1 à 4, caractérisé en ce que le composant gazeux (3) est l'hydrogène.

6. Procédé selon la revendication 5, caractérisé en ce que le mélange gazeux (2) contient des composants combustibles.

7. Procédé selon la revendication 6, caractérisé en ce que le gaz auxiliaire (7) est un gaz combustible de réseau.

8. Procédé selon la revendication 5, caractérisé en ce que le mélange gazeux (2) est un gaz de purge de synthèse d'ammoniac.

9. Installation pour la mise en oeuvre du procédé selon l'une des revendications 1 à 8, comprenant un dispositif de séparation par adsorption (1) ayant une entrée d'alimentation en mélange gazeux (2), une sortie de production du composant gazeux (3) et une sortie de résiduaire (4), et une ligne de gaz auxiliaire (7), caractérisée en ce qu'elle comprend un éjecteur (6) ayant une entrée de gaz moteur (5, 5'), une entrée de gaz d'injection reliée à la sortie de résiduaire (4) du dispositif de séparation par adsorption (1), et une sortie de mélange (18) reliée à la ligne de gaz auxiliaire (7).

10. Installation selon la revendication 9, caractérisée en ce que l'entrée de gaz moteur (5') de l'éjecteur (6) est reliée à l'entrée d'alimentation en mélange gazeux (2) du dispositif de séparation par adsorption (1).

11. Installation selon la revendication 9, caractérisée en ce qu'elle comprend, en amont du dispositif de séparation par adsorption (1), un dispositif de séparation par perméation (22) ayant une entrée d'alimentation en mélange gazeux (2), une sortie de production (25) reliée à l'entrée du dispositif de séparation par adsorption (1), et une sortie de résiduaire (23) reliée à l'entrée de gaz moteur (5) de l'éjecteur (6).

12. Installation selon la revendication 11, caractérisée en ce qu'elle comprend une dérivation (27) reliant l'entrée de gaz moteur (5) et la sortie de mélange (18) de l'éjecteur (6) et munie d'un détendeur (26).

## Patentansprüche

1. Verfahren zur Gewinnung mindestens eines gasförmigen Bestandteils (3) aus einem den zu gewinnenden gasförmigen Bestandteil enthaltenden Gasgemisch (2), das die Schritte umfaßt, einen Strom des Gasgemisches unter einem ersten Druck einen Adsorptionsabscheider (1) durchlaufen zu lassen, um in einer Gewinnungsphase unter im wesentlichen dem ersten Druck den gasförmigen Bestandteil und in einer Desorptions-Elutions-Phase unter einem zweiten Druck, der niedriger ist als der erste Druck, ein erstes Restgas (4) zu erhalten, und den Druck des ersten Restgases zu erhöhen, um es mit einem Strom eines Hilfsgases (7) zu vereinigen, dadurch gekennzeichnet, daß es den Schritt umfaßt, das Restgas (4) unter dem zweiten Druck einer Strahlpumpe (6) zuzuführen, die von einem Antriebsgasstrom (5, 5') unter einem dritten Druck versorgt wird, der größer als der zweite Druck vor der Vereinigung mit dem Hilfsgasstrom ist.

2. Verfahren nach Anspruch 1, dadurch gekennzeichnet, daß das Antriebsgas ein dem Hilfsgasstrom entnommener Teil ist.

3. Verfahren nach Anspruch 1, dadurch gekennzeichnet, daß das Antriebsgas ein stromaufwärts des Adsorptionsabscheiders (1) entnommener Teil des Gasgemischstroms (2) ist.

4. Verfahren nach Anspruch 1, dadurch gekennzeichnet, daß es die Schritte umfaßt, den Gasgemischstrom (2) unter einem vierten Druck, der höher ist als der erste Druck, einen Permeationsabscheider (22) durchlaufen zu lassen, um ein mit dem gasförmigen Bestandteil angereichertes Gasgemisch unter dem ersten Druck, das dem Adsorptionsabscheider (1) zugeleitet wird, sowie ein zweites Restgas (23) unter dem vierten Druck zu erhalten, das zumindest teilweise das Antriebsgas der Strahlpumpe (6) bildet.

5. Verfahren nach einem der Ansprüche 1 bis 4, dadurch gekennzeichnet, daß der gasförmige Bestandteil (3) Wasserstoff ist.

6. Verfahren nach Anspruch 5, dadurch gekennzeichet, daß das Gasgemisch (2) brennbare Bestandteile enthält.

7. Verfahren nach Anspruch 6, dadurch gekennzeichnet, daß das Hilfsgas (7) ein brennbares Stadtgas ist.

8. Verfahren nach Anspruch 5, dadurch gekennzeichnet, daß das Gasgemisch (2) ein Ammoniaksyntheseablaßgas ist.

9. Anlage zur Durchführung des Verfahrens nach einem der Ansprüche 1 bis 8, mit einem Adsorptionsabscheider (1), der einen Einlaß zur Versorgung mit einem Gasgemisch (2), einen Auslaß zur Gewinnung des gasförmigen Bestandteils (3) und einen Restgasauslaß (4) besitzt, und mit einer Hilfsgasleitung (7), gekennzeichnet durch eine Strahlpumpe (6), die einen Einlaß für Antriebsgas (5, 5'), einen mit dem Restgasauslaß (4) des Adsorptionsabscheiders (1) verbundenen Injektionsgaseinlaß und einen mit der Hilfsgasleitung (7) verbundenen Auslaß für das Gemisch (18) aufweist.

10. Anlage nach Anspruch 9, dadurch gekennzeichnet, daß der Einlaß für das Antriebsgas (5') der Strahlpumpe (6) mit dem Einlaß des Adsorptionsabscheiders (1) zur Versorgung mit dem Gasgemisch (2) des Adsorptionsabscheiders (1) verbunden ist.

11. Anlage nach Anspruch 9, dadurch gekennzeichnet, daß sie stromaufwärts vom Adsorptionsabscheider (1) einen Permeationsabscheider (22) aufweist, welcher einen Einlaß zur Versorgung mit dem Gasgemisch (2), einen mit dem Einlaß des Adsorptionsabscheiders (1) verbundenen Auslaß für die Gewinnung (25) und einen mit dem Einlaß für das Antriebsgas (5) der Strahlpumpe (6) verbundenen Restgasauslaß (23) besitzt.

12. Anlage nach Anspruch 11, dadurch gekennzeichnet, daß sie eine Abzweigung (27) aufweist, die den Einlaß für das Antriebsgas (5) und den Auslaß für das Gemisch (18) der Strahlpumpe (6) verbindet und mit einem Druckreduzierventil (26) versehen ist.


**Claims**

1. Process for production of at least one gaseous component (3) from a gaseous mixture (2) containing the gaseous component to be produced, comprising the steps of causing a flow of the gaseous mixture to pass at a first pressure through a device for separation by adsorption (1) so as to obtain, during a production phase substantially at the first pressure the gaseous component, and, during a desorption-elution phase, at a second pressure lower than the first pressure, a first process gas (4), and of increasing the pressure of the first process gas so as to combine it with a flow of an auxiliary gas (7), characterised in that it comprises the step of admitting the process gas (4) at the second pressure into an injector (6) fed by a flow of motive gas (5, 5') at a third pressure higher than the second pressure before combination with the flow of auxiliary gas.

2. Process according to Claim 1, characterised in that the motive gas is a tapped portion of the flow of auxiliary gas.

3. Process according to Claim 1, characterised in that the motive gas is a portion (5') tapped upstream of the device for separation by adsorption (1), of the flow of gaseous mixture (2).

4. Process according to Claim 1, characterised in that it comprises the steps of causing the flow of the gaseous mixture (2) to pass at a fourth pressure higher than the first pressure into a device for separation by permeation (22) so as to obtain a gaseous mixture enriched in the said gaseous component at the first pressure which is directed to the device for separation by adsorption (1), and a second process gas (23) at the fourth pressure constituting, at least in part, the motive gas of the ejector (6).

5. Process according to any of Claims 1 to 4, characterised in that the gaseous component (3) is hydrogen.

6. Process according to Claim 5, characterised in that the gaseous mixture (2) contains combustible components.

7. Process according to Claim 6. characterised in that the auxiliary gas (7) is a network fuel-gas.

8. Process according to Claim 5, characterised in that the gaseous mixture (2) is an ammoniac synthesis purge gas.

9. Installation for implementing the process according to any of Claims 1 to 8, comprising a device for separation by adsorption (1) having an inlet for feeding with gaseous mixture (2), an outlet for production of the gaseous component (3) and a process gas (4) outlet, and an auxiliary gas (7) line, characterised in that it comprises an ejector (6) having a motive gas (5, 5') inlet, an injection gas inlet connected to the process gas (4) outlet of the device for separation by adsorption (1), and a mixture outlet (18) connected to the auxiliary gas (7) line.

10. Installation according to Claim 9, characterised in that the motive gas (5') inlet of the ejector (6) is connected to the inlet for feeding with gaseous mixture (2) of the device for separation by adsorption (1).

11. Installation according to Claim 9, characterised in that it comprises, upstream of the device for separation by adsorption (1), a device for separation by permeation (22) having an inlet for feeding with gaseous mixture (2), a production outlet (25) connected to the inlet of the device for separation by adsorption (1), and a process gas (23) outlet connected to the motive gas (5) inlet of the ejector (6).

12. Installation according to Claim 11, characterised in that it comprises a by-pass (27) connecting the motive gas (5) inlet and the mixture (18) outlet of the ejector (6) and fitted with a pressure relief valve (26).

FIG.1

FIG.2

FIG.3

FIG.4